Europäisches Patentamt

European Patent Office

Office européen des brevets

(11) Publication number: **0 223 884**
**A1**

## (12) EUROPEAN PATENT APPLICATION

(21) Application number: **85307704.8**

(22) Date of filing: **24.10.85**

(51) Int. Cl.⁴: **A23G 9/28**

(43) Date of publication of application:
**03.06.87 Bulletin 87/23**

(84) Designated Contracting States:
**DE FR GB IT**

(71) Applicant: **MEIJI MILK PRODUCTS COMPANY LIMITED**
**3-6, Kyobashi 2-chome Chuo-ku**
**Tokyo 104(JP)**

(72) Inventor: **Wake, Takashi**
**39-21, Noguchicho 3-chome**
**Higashimurayama Tokyo(JP)**
Inventor: **Enomoto, Teruaki**
**7-13, Kemacho 4-chome**
**Miyakojima-ku Osaka(JP)**
Inventor: **Nishiura, Yasuo**
**6-3, Minamihonmachi 2-chome**
**Yao Osaka(JP)**
Inventor: **Takami, Yasuhiro**
**Midorino Mansion B-506 6-1, Kotesashi 3-chome**
**Tokorozawa Saitama(JP)**

(74) Representative: **Lee, Philip Graham et al**
**MARKS & CLERK 57/60 Lincoln's Inn Fields**
**London WC2A 3LS(GB)**

(54) Bar-shaped ice cake product and method and apparatus for it's manufacture.

(57) A bar-shaped ice cake product presents continuously shaped curves, bends, spirals, or other shapes. The apparatus provided for the manufacture of such a product includes a mix extruder nozzle arrangement (3) that forms an ice mix to a continuous, particular bar shape, an endless conveyer (1) on which the bar-formed mix is travelling, a cutter (5) which forms partial cuts (19) at regular intervals along the length of the mix, a freezer tunnel (4) which allows the segmented mix to be frozen while passing therethrough, and a frozen mix segment receiving conveyer (16) located lower than the endless conveyer on its outlet. Thus, the mix, which is being fed in its quasi-frozen state from the nozzle and formed to a continuous, particular shape, carries the cuts (19) formed by the cutter (5), passes through the freezer tunnel (4) where it is completely frozen, and is severed at the cuts (19) when it is transferred onto the receiving conveyer.

FIG. 1

FIG. 8

## "BAR-SHAPED ICE CAKE PRODUCT AND METHOD AND APPARATUS FOR IT'S MANUFACTURE"

This invention relates to an ice cream based bar-shaped ice cake product, as well as to a method of and an apparatus for the manufacture of such a product. More specifically, the method and apparatus proposed by the present invention consists essentially of forming a previously prepared ice mix into a continuous particular shape with curves, bends, spirals and so forth along its length.

Bar-shaped ice cake products which contain mixes such as ice cream, sherbet, and so forth are known to the dairy food manufacturing industry, and all of those products have a straight, monotonous shape. No product is of curved or bent shape. There is also known a product which has a relief pattern on its surface in order to give the product a variation in its form (as disclosed in Japanese Unexamined Patent Official Publication Nos. Showa 59 (1984)-120055 and Showa 60 (1985)-36730). This pattern is obtained by any appropriate pressure shaping means. This shaping process involves additional cost, resulting in an increase in the total manufacturing cost. An alternative solution, which permits the manufacture of a variety of forms of bar-shaped ice cake products without such additional cost, has been demanded.

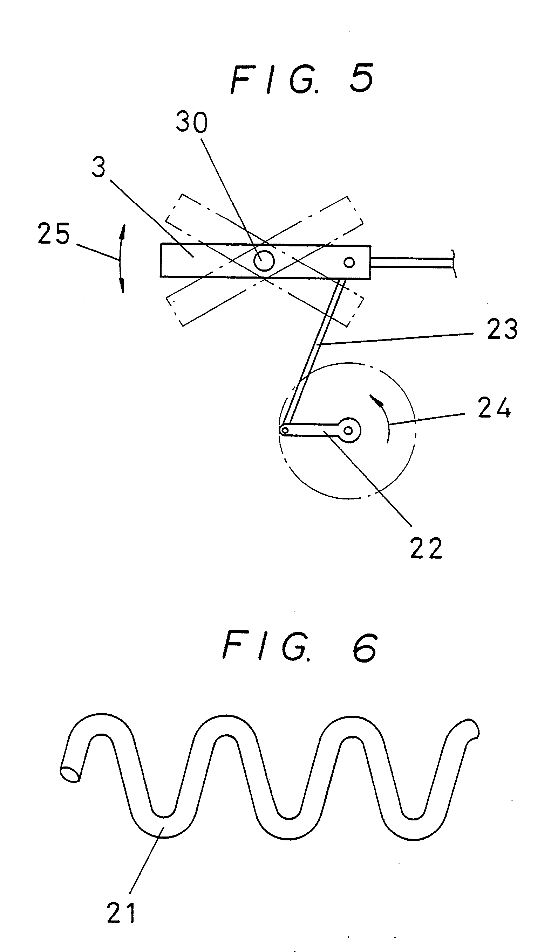

The mix moulding method is also known. In this method, individual moulds are employed, into which the mix is placed and is allowed to be frozen. Thus, the individually moulded bar-shaped ice cakes are obtained. Specifically, the method consists essentially of several steps of filling the mix into the individual moulds, allowing it to be frozen, and then removing the frozen results from the moulds. This multiple-step process raises a problem in improving productivity, and requires a sophisticated mechanism for that purpose. For example, the art of using the moulds to produce twisted ice cakes is known (as disclosed in Japanese Examined Utility Model Official Publication No. Showa 47 (1972)-18159), but the products obtained by this method only look like twists which are patterned by the moulds. Therefore, the use of the moulds makes it difficult to obtain bar-shaped ice cakes with curves, bends, spirals, and so forth as shown in Figs. 6, 8 and 9 of the accompanying drawings. This is one of the reasons why the moulding method is not preferred from economical and technical aspects.

As an alternative to the moulding method, it may be possible to form a mix to a continuous bar-shape, allow the shape to be frozen, and then cut the completely frozen result into pieces. According to the non-moulding method, however, damage might be caused since the cutting occurs in the completely frozen state. This would affect the yield. For this reason, this method is found to be useless.

Another method, which is different from those mentioned above is that which is disclosed in Japanese Examined Patent Official Publication No. Showa 56 (1981)-50812). This method consists essentially of feedng an ice mix from nozzles onto a conveyer, cutting the mix to a specified length and retracting the nozzles after each cutting action. A sophisticated timing control is implemented in this method, since it requires the movements of the involved nozzles, cutter and conveyer to be synchronized. This also raises a problem from the cost-saving aspect.

Another arrangement, which employs several mix extruder nozzles, is disclosed in various forms in Japanese Examined Utility Model Official Publication Nos. Showa 47 (1972)-34796, -34797, -34798, and French Patent Official Publication No. 2497728. These nozzles are operated so that each of the nozzles can feed a continuous spiral form of ice mix into a cup-shaped box or joint hole. Those expedients however cannot provide those particular shapes shown in Figs. 6, 8 and 9.

One object of the present invention is to provide a bar-shaped ice cake product which presents a variety of shapes such as curves, bends, spirals, and so forth.

Another object of the present invention is to provide a method whereby individual ice cakes each of a specific length (particularly, those having above-mentioned shapes) can be obtained in a continuous, successive manner.

Still another object of the present invention is to provide apparatus whereby individual ice cakes each of a specific length (particularly, those having the above-mentioned shapes) can be obtained in a continuous, successive manner.

The above objects are attained by extruding a quasi-frozen ice mix onto an endless conveyer so that it can be formed to a continuous bar-shape, forming partial cuts at regular intervals for the bar-formed mix travelling on the conveyer, allowing it completely to be frozen, and then allowing the frozen mix to be severed into pieces at the cuts when it is transferred from the conveyer onto another conveyer located below the mix conveyer.

A mix extruder is equipped with a particular shape opening, through which a mix is fed onto the conveyer. The mix extruder is usually in the form of a single or multiple-nozzle arrangement. In the multiple-nozzle arrangement, a similar kind of ice mix may be handled for all of the nozzles, or different kinds of ice mixes (such as vanilla ice cream and chocolate ice cream) may be handled for each of the nozzles.

The mix extruder may be stationary, which in this case provides a straight-bar formed mix. Otherwise, it may be movable, which in this case provides curved shapes such as waveforms, spirals, and so forth, according to the movement of the mix extruder. The mix extruder may include a dual-opening nozzle, which provides a dual-core bar-shaped ice cake, each core containing a different mix. When this dual-nozzle extruder is rotated, it provides a twisted shape like a stranded rope.

The continuous bar-shaped mix of any shape from any of the extruder nozzles is provided with cuts at regular intervals along its length when it is travelling on the conveyer. The cutter used for this purpose may have the form of a single blade, which is capable of moving up and down, traversing the mix on the conveyer path. Alternatively, the cutter may be equipped with a plurality of radial blades which are fixed to a shaft, rotatably mounted across the conveyer path. In either case, the cutter should preferably incorporate a heater.

An auxiliary freezing tunnel may be provided in advance of the cutter location. In this case, the ice mix output in its straight line from the extruder nozzles passes through the auxiliary freezing tunnel, where it is quasi-frozen. In its quasi-frozen state, it may be shaped by any pressing means. The straight-line ice mix is formed with partial cuts at the same time as the press-shaping occurs, or subsequent to the press-shaping.

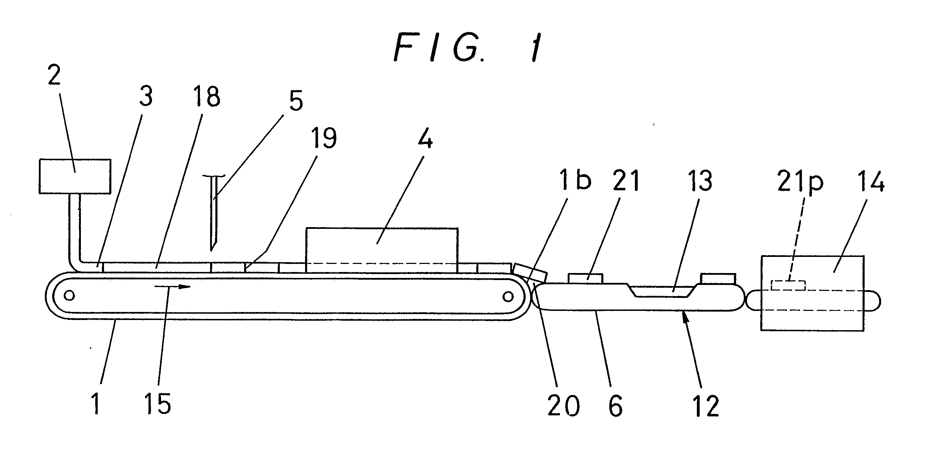

The portion of the mix which is formed with the cuts enters a freezer tunnel, through which the portion is allowed to be frozen until it becomes solid. After the tunnel, it is transferred from the conveyer onto another conveyer, which is located lower than the first conveyer. When it is transferred, it is automatically bent at the cuts and severed into pieces. This bending (and resulting severance) may be accomplished by down slanting the mix conveyer path beyond the freezer tunnel. In its preferred form, as shown in Fig. 1, a receiving conveyer is provided on the outlet of the endless conveyer, so that its travelling path is located at a lower level than that of the preceding conveyer.

The above features of the present invention will become more apparent from the following detailed description of several preferred embodiments by reference to the accompanying drawings, in which:

Fig. 1 is a front elevation of an apparatus embodying the present invention;

Fig. 2 is an enlarged perspective view of part of the apparatus in Fig. 1, which contains a single-blade cutter;

Fig. 3 is an enlarged perspective view of a variation of the cutter including multiple blades radially and rotatably supported on a shaft;

Fig. 4 shows several different examples of ice cake form produced by the apparatus of the first embodiment;

Fig. 5 is a plan view showing the arrangement of the mix extruder in a second embodiment;

Fig. 6 is an example of the ice cake form produced from the mix extruder of Fig. 5 as viewed in plan;

Fig. 7 is a sectional view of the mix extruder in a third embodiment;

Fig. 8 is an example of the ice cake form produced from the extruder nozzle arrangement of the third embodiment shown in Fig. 7, as viewed in plan;

Fig. 9 is also a different example of the ice cake form produced from the same extruder as viewed in plan;

Fig. 10 illustrates a variation of the extruder nozzle arrangement, as viewed in longitudinal cross-section;

Fig. 11 is a front view of the same extruder nozzle arrangement;

Fig. 12 is a side elevation of an apparatus of a fourth embodiment;

Fig. 13 is an example of the ice cake form obtained by the apparatus of Fig. 10, as viewed in plan;

Fig. 14 is a side elevation of the apparatus of a fifth embodiment;

Fig. 15 is a side elevation of the apparatus of a sixth embodiment;

Fig. 16 is a perspective view of a moulding press for the sixth embodiment; and

Fig. 17 is an example of the ice cake form obtained in a seventh embodiment.

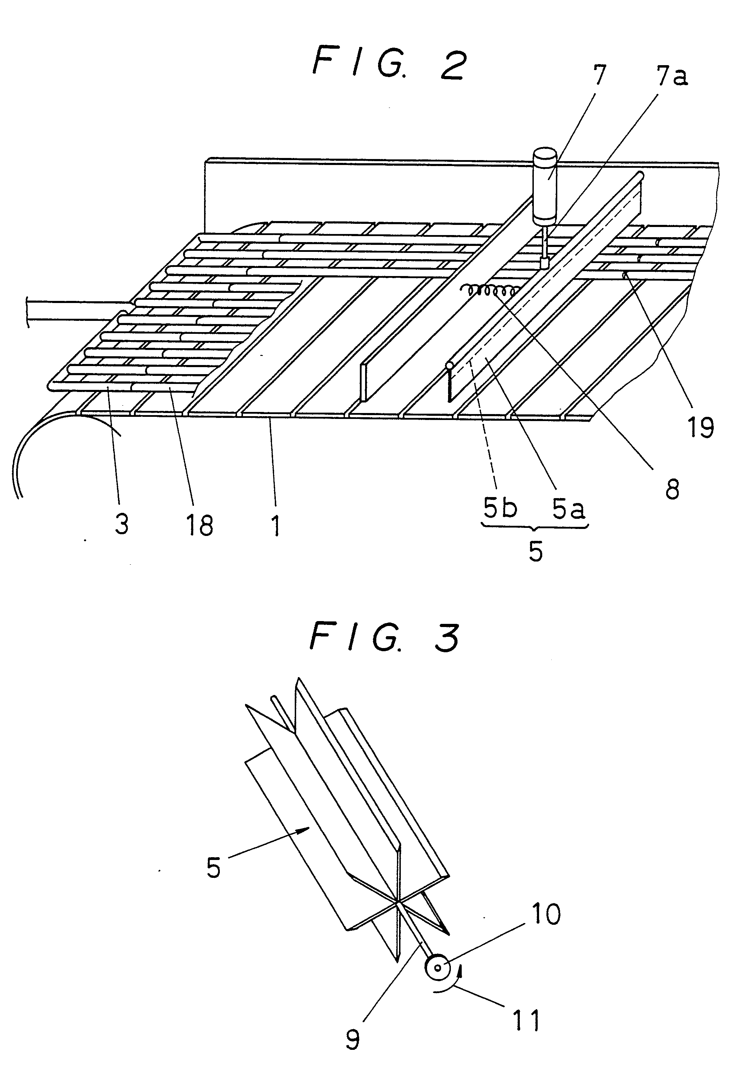

In its first embodiment shown in Figs. 1 and 2, the apparatus according to the present invention includes an endless transversely running caterpillar conveyer 1 and a mix extruder nozzle device 3 located on the entry side of the caterpillar conveyer 1. This device consists of a plurality of nozzles extending in the direction of the travel path of the conveyer 1 and arranged in parallel across the travel path and is connected to a freezer 2 which feeds an ice mix in its quasi-frozen state into each of the nozzles, a cutter 5 located on the outlet side of the nozzle arrangement 3, a freezer tunnel 4 covering the travel path and extending along it, and a receiving net-conveyer 6 adjacent the travel end of the conveyer 1, the travel path of the net-conveyer 6 being located at a lower level (such as about 5cm) than that of the conveyer 1.

The nozzles of the extruder device 3 have a particular opening shape which defines the cross-sectional shape of a bar-shaped ice cake to be continuously extruded from the opening. The opening may have any shape such as round, square, polygonal, or gourd-shaped, as appropriate. A dual-opening nozzle may be used.

In the above described embodiment, the cutter 5 has the form of a single blade 5a, which traverses the travel path of the caterpillar conveyer 1 and is capable of movement up and down vertically relative to the horizontal plane of the travel path. The cutter 5 contains a heater 5b extending along its length. The vertical movement of the cutter 5 is controlled by an air cylinder 7 whose rod 7a is fixed to the top edge of the cutter 5. A restoring spring 8 biases the cutter 5 toward its original position.

Fig. 3 illustrates a varied form of the cutter 5, which includes a rotary shaft 9 traversing the travel path of the caterpillar conveyer 1, the shaft 9 carrying a plurality of radially arranged blades 5a. The rotary shaft also has a pulley 10 at one end, and is rotated in the direction of an arrow 11 by driving the pulley for rotation.

The freezer tunnel 4 is known per se, and is self-explanatory. The net-conveyer 6 contains a chocolate coating device 12 as part of this conveyer, which includes a chocolate tank 13 extending along the conveying path. A chocolate coating hardening tunnel 14 is provided as an extension of the net-conveyer 6.

The operation of the above described apparatus is as follows.

The mix source freezer 2 feeds the ice mix, preferably in its sub-frozen state, into the extruder nozzle device 3 while the caterpillar conveyer 1 is travelling in the direction of an arrow 15. Each of the nozzles extrudes the ice mix 18, forming it to a continuous, straight bar-shape. The bar-shaped ice mix from each of the nozzles is continuously fed onto the travelling conveyer 1, on which it is moving toward the cutter location 5. In its form shown particularly in Fig. 2, the cutter blade 5a is moving up and down at regular time intervals. In its varied form shown in Fig. 3, the cutter blades are rotating on their shaft at a revolution speed which corresponds to the regular time intervals for the single-blade cutter. Thus, the bar-shaped ice mix is formed with partial cuts 19 at regular intervals corresponding to the time intervals for the single or multiple-blade cutter 5. In this case, the segments produced by the cutting are not completely disconnected from each other since the cutting takes place for the ice mix in its quasi-frozen state. Thus, the portion of the ice mix which contains a train of the segments is travelling toward the next processing step.

That portion of the ice mix containing the segments enters the freezer tunnel 4, where it is rapidly frozen, and then it passes through the tunnel, travelling in its sufficiently solidified state toward the outlet end 1b of the caterpillar conveyer 1. At the end 1b , the train of the segments is transferred into the net-conveyer 6 which is located lower than the travel path of the conveyer 1. As there is a difference 20 in height between the travel paths for the conveyers 1 and 6, a downwardly sloping path is formed between the two conveyers. Thus, as each segment is being transferred through the downward sloping path onto the net-conveyer 6, it is bent down at the cut 19 and is then severed from the following segment.

Each individual segment 21 as severed is travelling toward the chocolate coating station 12 on the net-conveyer 6, where it has a chocolate coating within the chocolate tank 13. Then, the chocolate-coated segment 21p is travelling through the tunnel 14 where the chocolate coating is allowed to harden. The result is a bar-shaped ice cake product.

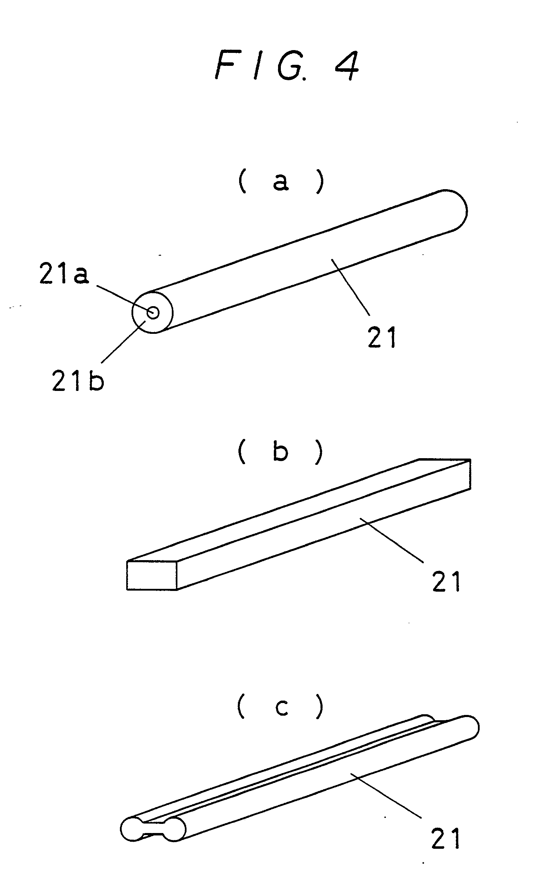

The ice cake obtained through the above-described steps is a straight bar, whose shape in cross section is defined by the shape of the opening of a nozzle. This shape may have a variety of forms, as shown in Fig. 4 (a) through (c). The shape particularly shown in Fig. 4 (a) is obtained by using a dual-opening nozzle. This consists of two layers, the central core 21a containing a sauce of any choice and the outer layer 21b containing an ice cream of any choice.

A variation of the mix extruder nozzle arrangement 3 is shown in Fig. 5. In Fig. 5, an extruder nozzle 3 is supported at the middle point on a shaft 30 so that it can swing through a certain angle across the horizontal plane of the conveyer travel path. This swinging is accomplished by a crank mechanism 22, which includes a crank link rod 23 whose end is pivoted to the nozzle on the mix entry side.

In the embodiment shown in Fig. 5, when the crank 22 is rotated in the direction of an arrow 24, the mix feeder side of the nozzle 3 is swung on the shaft 30 as indicated by a double arrow 25. Thus, when an ice mix is continuously extruded from the nozzle as it is swinging, the ice mix output is formed to a serpentine shape 21 having curves or bends, as shown in Fig. 6. The cutting and severing for the extruded ice mix take place as described for the first embodiment.

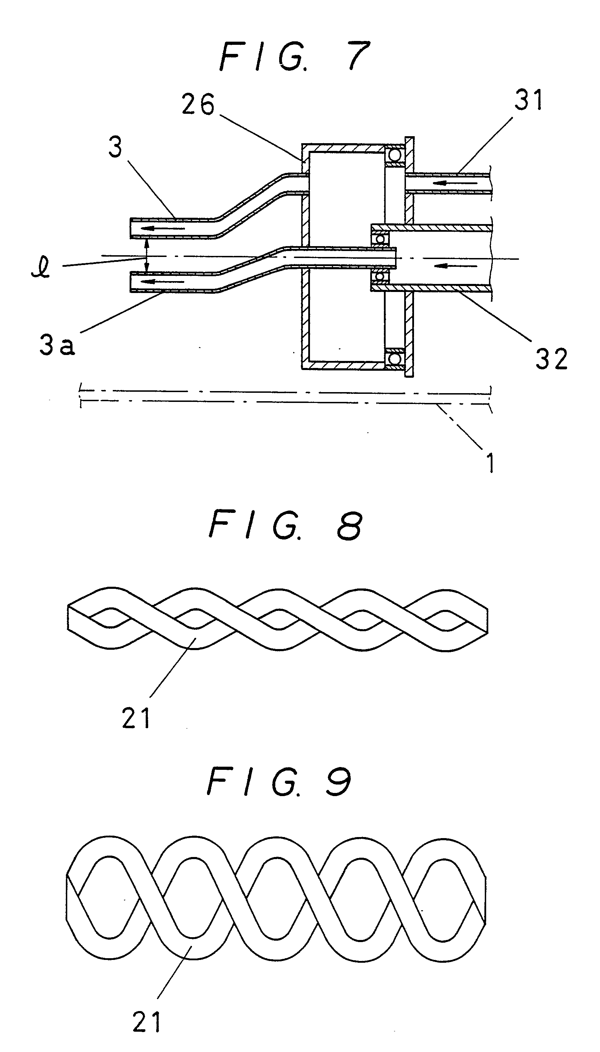

The nozzle arrangement 3 shown in Fig. 7 includes a hollow, disc-like casing 26, which is disposed rotatably above the caterpillar conveyer 1, and two nozzles 3 and 3a which are extended from the casing 26 such that their feed ports are positions diametrically opposite each other at a distance of 1.

In the embodiment shown in Fig. 7, the extruding of the ice mixes from the nozzles takes place while the casing 26 is rotated about a dot-dashed axis passing through the centre. The resulting shape 21 looks like a two-strand rope, as shown in Fig. 8. An ice cake containing two different flavourings and two different colourings may also be obtained by using the nozzle arrangement shown in Fig. 8. In this case, two different kinds of ice mixes each containing a different flavouring and a different colouring may be supplied from each of the nozzles. In Fig. 7, reference numerals 31 and 32 designate ice mix feed pipes connected to the corresponding nozzles.

When the distance of 1 between the nozzles 3 and 3a is increased, a two-strand rope-like shape 21 is also formed, but it contains larger stitches as shown in Fig. 9.

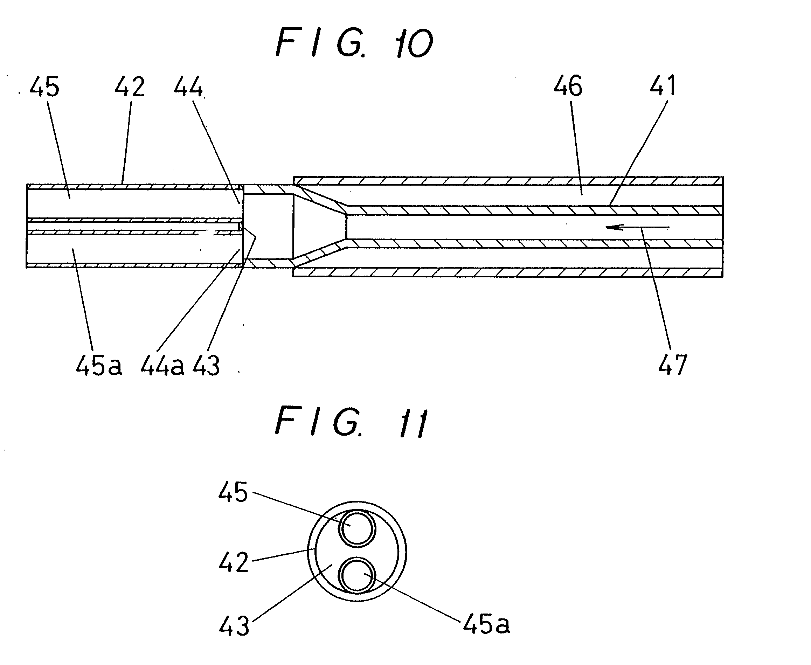

A two-strand ice cake that contains similar ice mixes in each strand may also be obtained by using the extruder nozzle arrangement shown in Figs. 10 and 11. Specifically, this extruder nozzle arrangement consists essentially of a single ice mix feeder pipe 41 enveloped by an outer jacket 41, and a cylindrically-shaped casing 42 whose one end is connected to the outlet end of the ice mix feeder pipe 41 so that it can allow the casing 42 to be rotated. The rotary casing 42 contains two nozzle pipes 45 and 45a extending longitudinally toward their outlet nozzles and partitioning plate 43 on the mix entry side thereof, the plate 43 carrying two diametrically opposed through holes to which the corresponding nozzle pipes 45 and 45a are connected.

For the operation of the extruder nozzle arrangement just described above, an ice mix is fed through the ice mix feeder pipe 41 from its source, and the rotary casing 42 is also driven for rotation. Then, the ice mix is separated into the two nozzle pipes 45 and 45a. and is delivered out of their nozzles. It is formed with partial cuts, completely frozen, and finally severed at the cuts, and the resulting two-stranded shape looks like the one shown in Fig. 8 or 9.

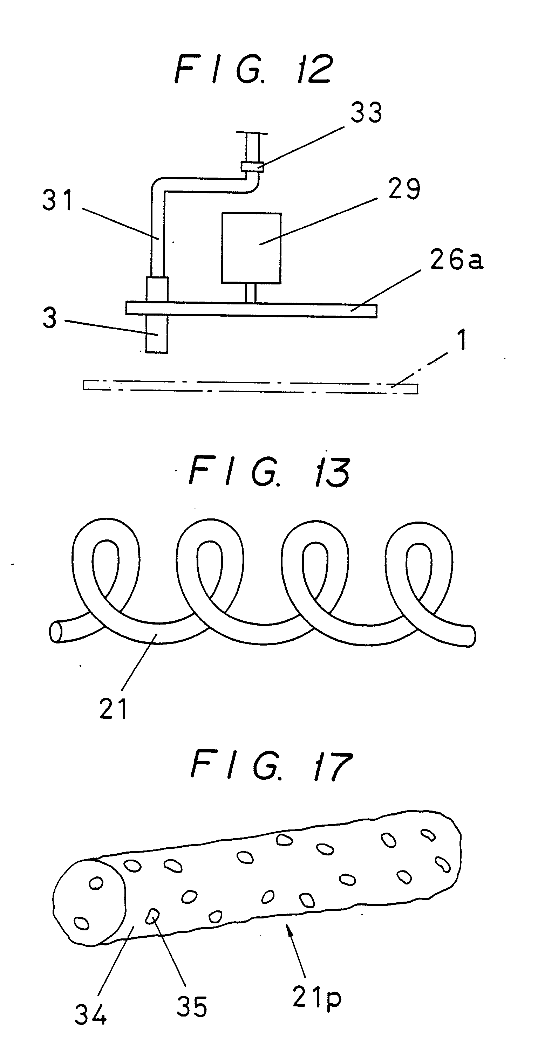

Fig. 12 is a variation fo the mix extruder nozzle arrangement (fourth embodiment), which is shown - schematically. This variation includes a rotary plate 26a which is disposed horizontally above the caterpillar conveyer 1, a down-directed nozzle 3 extending through the plate 26a on one peripheral side thereof, an elbow-shaped mix feed pipe 31 having one end connected to the nozzle 3 and the other end supported by a swivel 33 and connected to the mix supply freezer (not shown), and a motor 29 for rotating the plate 26a.

According to the embodiment shown in Fig. 12, the mix feeding from the nozzle takes place while the plate 26a is rotating, and then the mix is formed with partial cuts, completely frozen, and severed at the cuts. The output 21 might look like the shape as shown in Fig. 11, which contains several loops.

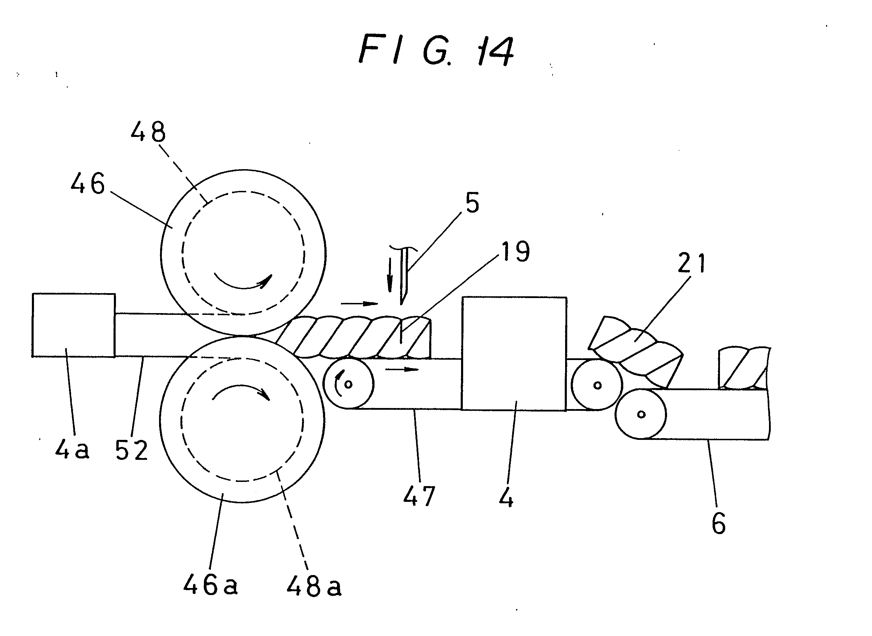

Fig. 14 is a further variation of the preceding embodiments, in which a preliminary freezing tunnel 4a is provided prior to the cutter location 5. In this varied embodiment, the ice mix output 52, which is supplied in its straight-line form from the extruder nozzles, first passes through the preliminary freezing tunnel where it is sub-frozen to its semi-solidified form, and then is shaped by means of a pair of moulding rolls 46, 46a to present a continuous stranded pattern. Following the strand shaping, it is then formed with partial cuts 19 at regular intervals, travelling further through the final freezing tunnel 4 where it is completely frozen to its solid state. The completely frozen ice with the partial cuts is severed at the cuts when it is transferred from the higher travelling conveyer 47 onto the lower net-conveyer 6, as described in the first embodiment. Individual ice cakes 21 as severed have a specific length defined by the cuts.

The press rolls 46, 46a have particular pattern grooves 48, 48a formed around their outer circumferences. The pattern grooves are coated with any suitable material, such as Teflon, which can prevent the ice mix from adhering to the grooves.

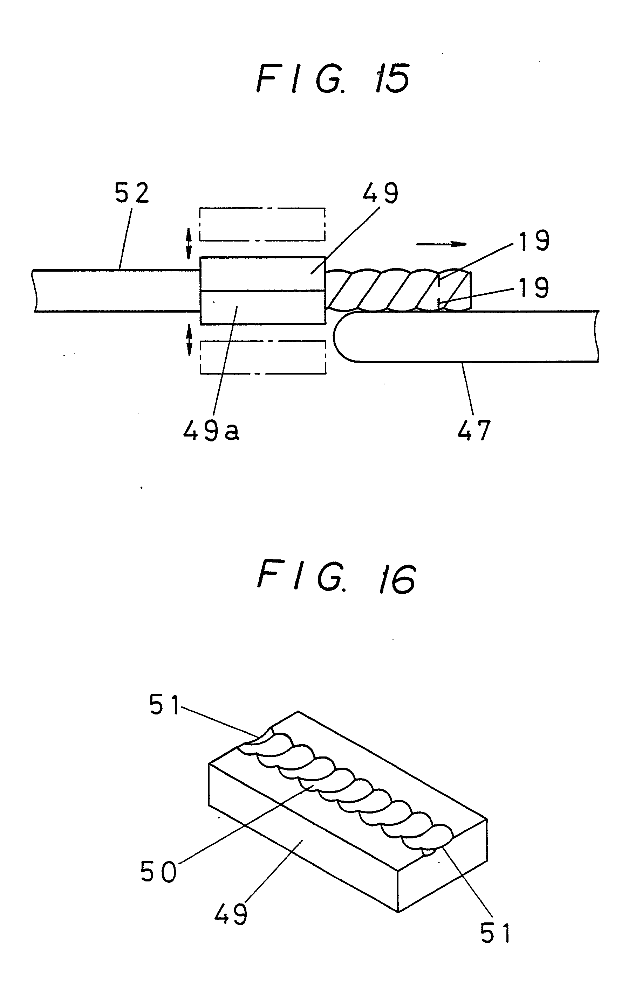

The embodiment shown in Figs. 15 and 16 includes a pair of moulding plates 49, 49a in place of the moulding rolls in the previous embodiment of Fig. 14. The moulding plates are capable of movement closer to and away from each other. The ice mix output 52 which is delivered in its sub-frozen semi-solidified state from the preliminary freezing tunnel is shaped to a continuous strand pattern when it is passing through the moulding plates 49, 49a. Each of the moulding plates 49, 49a has a particular pattern groove 50 such as a strand pattern, and those pattern grooves together provide a complete strand pattern. The pattern groove 50 extends across the length of each moulding plate, and is terminated at the edge on the opposite sides of the plate where a cutter 51 is formed. This cutter 51 provides a cut 19 for the ice mix being shaped.

The various forms of the apparatus including the corresponding nozzle arrangements have been described. The following description concerns the method for performing the present invention. The two different ice mixes used in practising the method contain the following proportions of the ingredients:

5

| Composition 1 | | Composition 2 | |
|---|---|---|---|
| skim milk powder | 10 | skim milk powder | 10 |
| palm or coconut oil | 8 | cocoa | 2.5 |
| sugar | 12 | palm or coconut oil | 7.5 |
| corn syrup | 8 | sugar | 13 |
| emulsifier | 0.2 | corn syrup | 7 |
| stabilizer | 0.2 | emulsifier | 0.2 |
| $\beta$ carotene | 0.01 | stabilizer | 0.2 |
| vanilla flavoring | 0.1 | chocolate flavoring | 0.1 |
| water | 61.49 | water | 59.5 |
| Total | 100.0 | Total | 100.0 |

An ice cream mix composed of the ingredients listed above in the composition 1 or 2 is passed through a continuous ice cream freezer (KLMT), and the resulting ice mix contains an overrun of 30% and is cooled to -6.5°C. This mix is then fed into the nozzle whose outlet opening is of round cross section with a diameter of 10mm. From the nozzle, the mix is continuously extruded onto the travelling stainless-steel caterpillar conveyer. In this example, the extruding speed of the nozzle is the same as the travelling speed of the conveyer.

Then, that portion of the ice mix which is extruded and formed into a continuous bar travels on the conveyer toward the cutter location. The cutter has a sharp edge blade which is 1mm thick, and is reciprocating up and down vertically at regular time intervals. Those time intervals correspond to the cutting length provided by the cutter, which in this case is equal to 100mm. Thus, the partial cuts are formed in the bar-shaped ice mix by the cutter at those intervals. That portion of the ice mix which includes a chain of segments is then travelling toward the rapid freezing tunnel, which is maintained at a temperature of -50°C. Within the tunnel, the rapid freezing normally takes place for five minutes, after when the chain of segments leaves the tunnel and is frozen to -30°C.

At the end of the caterpillar conveyer where it is returned, those segments are transferred onto the net-conveyer which is located lower than the travel path of the preceding conveyer. As such, each segment is physically severed at the partial cut apart from the following segment. Each individual segment, which is 100mm long, then travels on the net-conveyer toward the chocolate coating station. At this stage, each segment measures 10mm diameter and 100mm length (which is equal to 7.9 ml).

The chocolate coating station includes a chocolate enveloper, where each segment is entirely soaked in the coating chocolate. The coating chocolate contains a mixture of chocolate 34 and crushed peanuts 35. Then, each chocolate-coated segment passes through the chocolate hardening tunnel, and the result is a crushed peanuts and chocolate coated ice cake 21p, as shown in Fig. 17.

The coating chocolate used in this example contains 10% of crushed peanut pieces. The coating for the finished ice cake 21p contains 4g of chocolate and 0.5g of crushed peanuts for each cut length, both the figures being given as an average.

The following is an eighth example in which two ice mix supply freezers are used. In this example, the ice mix contains the ingredients listed above in the composition 1, and two kinds of ice mixes are obtained. Once is a vanilla ice cream and the other is a chocolate ice cream, both of which contain 30% overrun and are frozen to -6.5°C. The mix extruder nozzle arrangement including two nozzles of round cross section having a 8mm diameter is employed. By rotating the nozzle arrangement, the two kinds of ice mixes are extruded through the respective nozzles onto the stainless-steel caterpillar conveyer. The rotating nozzles produce a two-strand rope shape 21, as shown in Fig. 8. The subsequent processing steps are the same as in the preceding example. Specifically, the cutting provides cuts at regular intervals, which in this case correspond to a length of 80mm, followed by the rapid freezing, which is in turn followed by the pure chocolate coating by the chocolate enveloper. Each of the thus obtained ice cakes contains 7g of chocolate coating for each cut length.

The present invention has been fully described, depending on the product, apparatus, and method which are all offered by the present invention.

Firstly, the bar-shaped ice cake product offered by the present invention features a variety of cross sectional shapes such as round, square, gourd-shape, and so forth depending upon the cross sectional shape of the nozzle to be used, as well as a variety of linear shapes such as waveforms, spirals, stranded-rope shape, and so forth, depending upon the movement of the nozzle(s).

The following advantage can be obtained by practising the method of the present invention. That is, the continuous manufacture of individual ice cakes of a specific length is permitted by previously providing partial cuts at specific intervals along the length of the ice mix from the extruder nozzle, prior to entering the freezer, and allowing the ice mix segments automatically to be separated from each other at the cuts after being completely solidified by the freezer.

The apparatus of the present invention provides a higher productivity and accordingly an improved yield. This can be attained by allowing a chain of the previously cut and completely frozen ice mix segments to travel on the downward sloping path and then allowing them automatically to be separated at the cuts. The cutting takes place for the ice mix in its sub-frozen state, prior to the complete freezing. Thus, the separation of those segments can be made easily at the previously formed cuts without producing possible damages.

Although the invention has been described by way of several preferred embodiments thereof, it should be understood that various changes and modifications may be made without departing from the invention as defined by the appended claims.

## Claims

1. An ice mix-based cake product having the form of a bar, including specific successive curved shapes along its length and specific shapes in cross section.

2. An ice mix-based cake product as defined in Claim 1, wherein the curved shapes include waveforms, spirals, or stranded rope shapes.

3. An ice mix-based cake product as defined in Claim 1, wherein the shapes in cross section include round, square, or gourd-shape.

4. A method for the manufacture of an ice mix-based cake product having the form of a bar, which comprises the steps of:

extruding a previously prepared ice mix onto a travelling conveyer such that said ice mix can be formed to a continuous bar shape;

forming partial cuts at specific intervals along the length of said continuous barlike ice mix and forming a chain of ice mix segments;

allowing said chain of ice mix segments to be frozen until it becomes solid; and

allowing said frozen ice segments to be separated from each other at the previously provided cuts.

5. A method as defined in Claim 4, wherein the ice mix is extruded in its sub-frozen state, and the mix extruding takes place through a nozzle unit.

6. A method as defined in Claim 5, wherein said nozzle unit includes a set of a plurality of nozzles.

7. A method as defined in Claim 5, wherein said nozzle unit includes nozzles which are stationary, or capable of circular or swivel motion.

8. A method as defined in Claim 4, wherein the partial cuts are made by a reciprocating cutter or a rotary cutter.

9. A method as defined in Clam 4, wherein the separation of the frozen ice mix segment is done by causing said frozen ice segments to travel down at the outlet end of said conveyer.

10. An apparatus for the manufacture of an ice mix-based cake product having the form of a bar, which comprises:

a first conveyer (1) running along its length;

means (3) for extruding a previously prepared ice mix onto the travel path of said first conveyer, in the direction of travel of the conveyer;

cutting means (5) for forming partial cuts (19) at specific intervals along the length of said extruded ice mix and forming a chain of ice mix segments;

a freezer tunnel (4) for allowing said chain of ice mix segments to be frozen until it becomes solid; and means for allowing said frozen ice mix segments to be severed at the cuts from each other, said severing means including a combination of said first conveyer (1) and a second conveyer (6) adjacent the outlet end of said first conveyer, the travel path of said second conveyer (6) being located at a lower level than that of said first conveyer (1).

11. An apparatus as defined in Claim 10, wherein said ice mix extruding means includes a single or multiple-nozzle arrangement.

12. An apparatus as defined in Claim 11, wherein said single or multiple nozzle arrangement is mounted stationary, rotatably or swivelably.

13. An apparatus as defined in Claim 11, wherein a nozzle has a round, square, or gourd-shape cross section.

14. An apparatus as defined in Claim 11, wherein a nozzle is a dual-opening nozzle.

# FIG. 1

0 223 884

# F I G. 2

# F I G. 3

# F I G. 4

( a )

21a

21b

21

( b )

21

( c )

21

# F I G. 5

30

3

25

23

24

22

# F I G. 6

21

## F I G. 7

## F I G. 8

## F I G. 9

# FIG. 10

# FIG. 11

0 223 884

# F I G. 12

33

31

29

26a

3

1

# F I G. 13

21

# F I G. 17

34

35

21p

# F I G. 14

0 223 884

# F I G. 15

# F I G. 16

| European Patent Office | EUROPEAN SEARCH REPORT | Application number |
|---|---|---|
| | | EP 85 30 7704 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 044 689 (UNILEVER)<br><br>* Figures 1-10; claims 1-8; page 2, line 3 - page 3, line 6 * | 1-7,10 -14 | A 23 G 9/28 |
| Y | | 8,9 | |
| Y | US-A-4 507 326 (J.W. TARANTINO)<br>* Figures 1a, 1b * | 1,4,10 | |
| Y | GB-A- 660 097 (R.TURNER)<br><br>* Figures 1,5,7; page 3, line 10 - page 4, line 111; page 4, lines 120-127 * | 1,4,8, 9 | |
| Y | GB-A- 658 793 (ROSE BROTHERS)<br><br>* Figure 1 * | 1,4,8, 9 | TECHNICAL FIELDS SEARCHED (Int. Cl.4)<br><br>A 23 G |
| A | US-A-1 891 230 (M.G. HARNDEN) | | |
| A | FR-A-2 497 729 (G. JAEGER) | | |
| A | FR-A- 810 911 (VOGT PROCESSES)<br><br>--- -/- | | |

The present search report has been drawn up for all claims

| Place of search | Date of completion of the search | Examiner |
|---|---|---|
| THE HAGUE | 27-06-1986 | GUYON R.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

| DOCUMENTS CONSIDERED TO BE RELEVANT | | | Page 2 |
|---|---|---|---|
| Category | Citation of document with indication. where appropriate, of relevant passages | Relevant to claim | CLASSIFICATION OF THE APPLICATION (Int. Cl.⁴) |
| A | US-A-2 282 313 (A.E. HERSHEY) | | |
| A | US-A-2 613 488 (G.R. ATTRIDE) | | |
| A | US-A-2 054 835 (A.C. ROUTH) | | |
| A | US-A-2 428 112 (W.L. GIBBONEY) | | |
| A | US-A-1 714 234 (J.A. OST) | | |
| A | GB-A-1 076 117 (UNILEVER) | | TECHNICAL FIELDS SEARCHED (Int. Cl.⁴) |

The present search report has been drawn up for all claims

| Place of search | Date of completion of the search | Examiner |
|---|---|---|
| THE HAGUE | 27-06-1986 | GUYON R.H. |